# EUROPÄISCHE PATENTANMELDUNG

(11) **EP 0 763 502 A2**
(43) Veröffentlichungstag der Anmeldung: **19.03.1997**
(21) Anmeldenummer: 96114047.2
(22) Anmeldetag: 03.09.1996
(51) Int. Cl.: C02F 1/54, C02F 1/28, C02F 11/00

(54) **Wasser- und Schlammbehandlung mit Huminstoffen**

(30) Priorität: 09.09.1995 DE 19533409
(71) Anmelder: Bakelite AG, 58642 Iserlohn-Letmathe (DE)
(72) Erfinder: Oeste, Franz D., 35274 Kirchhain-Schönbach (DE); Lehnert, Joachim, 34576 Homberg (DE)

(57) **Zusammenfassung**

Die Erfindung liegt in einem Verfahren zur oxidierenden oder reduzierenden Umsetzung von Stoffen in der wäßrigen Phase unter Verwendung von die Umsetzung verbessernden Hilfsstoffen A, wie Katalysatoren, Fermenten, Kolloiden, adsorptionsaktiven Feststoffen und/oder lebenden Zellen sowie unter bedarfsweiser Verwendung von Hilfsstoffen B, die die Abscheidung gelöster, dispergierter, emulgierter oder kolloidaler Umsetzungsprodukte und sonstiger Wasserinhaltsstoffe von der wäßrigen Phase ermöglichen oder verbessern. Dabei bestehen die Hilfsstoffe A zumindest teilweise aus gelöstem und/oder ausgefälltem überwiegend hochmolekularem Huminstoff und die Hilfsstoffe B zumindest teilweise aus ausgefällten, überwiegend hochmolekularen Huminstoffen.

## Beschreibung

Die Erfindung betrifft ein neues Verfahren zur Beschleunigung der oxidativen oder reduktiven Stoffumsetzungen in Gegenwart von wäßriger Phase, wie sie überwiegend zur biotischen oder abiotischen Wasser- und Schlammaufbereitung üblich sind.

Eine Reihe von Wasserinhaltsstoffen läßt sich durch Reduktions- oder Oxidationsprozesse abscheiden oder beseitigen. So läßt sich Wasser, das organische Stoffe enthält, durch Oxidation reinigen. Das gilt auch für anorganische Inhaltsstoffe wie z.B. zweiwertige Eisenionen oder Ammonium.

Auch die Gewässerreinigung durch Reduktion ist bekannt. Sie wird z.B. angewendet zur Entfernung von Chromat, Nitrat, Halogenkohlenwasserstoffen, Sulfat und organischen Bestandteilen. Derartige Reduktionsprozesse sind auch aus der Schlammfaulung bekannt, bei der organisches Material im Schlamm biologisch zu Methan, Wasser und Kohlendioxid umgesetzt wird.

Im allgemeinen werden Oxidationsmittel wie Sauerstoff, Ozon, Wasserstoffperoxid, Hydroxylradikale, Permanganate, Nitrat, Chlor oder Chlordioxid eingesetzt. Als Reduktionsmittel werden Stoffe wie Wasserstoff, Zink, Eisen, Magnesium, Aluminium, organische Verbindungen oder Ammonium eingesetzt.

Diese Umsetzungen werden unkatalysiert, katalysiert oder auch mittels biotischer Vermittlung durchgeführt. Als Katalysatoren werden Aktivkohlen, Schwermetalloxide, Edelmetalle oder photolytisch aktivierte Halbleiter eingesetzt.

Als Reaktionsprodukte werden gasförmige Stoffe wie z.B. Stickstoff, Kohlendioxid, Methan, Schwefelwasserstoff, flüssige Stoffe wie z.B. Wasser oder wäßrige Lösungen und in vielen Fällen feste Stoffe wie z.B. Schwermetallhydroxide, Schwermetallsulfide sowie belebte oder unbelebte organische Schlämme erhalten.

Vielfach ist auch dann, wenn keine festen Reaktionsprodukte entstehen, mit schlammförmigen Verunreinigungen zu rechnen, wenn feste Katalysatoren, Adsorptionsmittel oder biologisch aktive Schlämme angewendet werden.

Der Anfall dieser Stoffe bedingt in den meisten Fällen den Einsatz von Sedimentationshilfsmitteln oder Filterhilfsmitteln. Als solche werden in der Regel anorganische und/oder organische Flockungsmittel eingesetzt wie z.B. Aluminiumsalze und/oder organische Polymere wie z.B. Polyacrylate.

Dabei entstehen in der Regel untrennbare bzw. mit wirtschaftlich nicht vertretbaren Mitteln zu trennende Gemische aus Schlammkomponenten, die z.B. beladenes Aktivkohlepulver, Flockmittelrückstand, Mikrobensuspension und mineralische Stoffkomponenten enthalten können.

Die genannten Verfahren benötigen überdies jeweils eine Mindestzeit, um
1. die Umsetzung bis zu dem erforderlichen Umsatzgrad durchzuführen und
2. die Abtrennung der Schlammkomponenten von der Wasserphase mit der notwendigen Wirksamkeit vorzunehmen.

Es wird daher angestrebt, die Reaktionszeit und die Abscheidezeit zu minimieren, weil hierdurch Investitionskosten und negative Einwirkungen auf die Umwelt wie z.B. Energieverbrauch, Resourcenverbrauch, Emissionen minimiert werden können.

Das wird nach dem Stand der Technik durch den Einsatz von Hilfsstoffen wie Katalysatoren, Aktivkohle und Flockungsmitteln bewirkt.

Ein weiterer Nachteil der bekannten Umsetzungsmethoden ist, daß sich die zur Umsetzung verwendeten Hilfsstoffe wie Aktivkohle oder Flockungsmittel sowie gegebenenfalls die Umsetzungsprodukte gar nicht oder nur unter erheblichem Aufwand zurückgewinnen lassen.

Es ist daher Aufgabe der Erfindung, ein Verfahren zur Aufbereitung von Wasser und Schlamm, insbesondere von Grund-, Sicker- und Abwasser sowie Klärschlamm bereitzustellen, das diese Nachteile nicht hat, wohl aber die Vorteile einer kurzen Reaktions- und Abscheidezeit. Die Aufgabe wird gelöst durch ein Verfahren gemäß der Ansprüche 1-14.

Es wurde gefunden, daß diese Vorteile, nämlich Beschleunigung der oxidierenden oder reduzierenden Umsetzung und Beschleunigung der Abtrennung des Schlammes und gegebenenfalls kolloidaler und gelöster Bestandteile wie z.B. niedermolekulare Huminstoffe durch das erfindungsgemäße Verfahren erreicht werden, indem in dem Wasser oder Schlamm, in dem die Umsetzung der Inhaltsstoffe vorgenommen werden soll, ein überwiegend holchmolekularer Huminstoff dispergiert und/oder aufgelöst wird, wobei der Huminstoff überwiegend Huminsäuren oder Huminate enthält mit Molgewichten größer 5 000, die molekulardispers und/oder kolloid aufgelöst werden und dann vor, während und/oder nach der Umsetzung quantitativ zur Ausfällung gebracht werden.

Bei dem erfindungsgemäßen Verfahren ist die vielfach zur Beschleunigung der Umsetzung als Katalysator und/oder Adsorbens und/oder mikrobielles Aufwachssubstrat eingesetzte Aktivkohle überflüssig oder kann zumindest stark reduziert werden, weil die hochmolekularen Huminstoffe sogar zum Teil wirksamer sind als Aktivkohle, wie sich überraschenderweise herausgestellt hat.

Die Eigenschaft der ausgefällten Huminstoffe als Flockungsmittel bewirkt außerdem, daß in den meisten Fällen ganz oder zum Teil auf Flockungsmittelzugabe nach beendeter Umsetzung zur Abtrennung der Schlammphase verzichtet werden kann.

Außerdem lassen sich die nach der Umsetzung als Schlamm verbleibenden Hilfs- und Umsetzungsprodukte wesentlich einfacher recyclieren, als dies nach den bekannten Verfahren möglich wäre.

Der hochmolekulare Huminstoff läßt sich zum größten Teil wieder durch saure und/oder alkalische Extraktion zurückgewinnen. Aus dem verbleibenden Extraktionsrückstand lassen sich dann gegebenenfalls weitere Stoffe wie z.B. Schwermetalle oder Öle zurückgewinnen.

In der Literatur EP-A 0 467 018 und EP-A 0 499 696 werden Verfahren zur Detoxifizierung schadstoffbelasteter Wässer und Flächen durch niedermolekulare Huminstoffe oder wäßrige Huminstofflösungen mit Molgewichten zwischen 300 und 1 500 beschrieben. Diese Stoffe, die auch in natürlichen Moorwässern auftreten, haben aber, wie aus der Trinkwasserreinigung bekannt ist, den Nachteil, daß sie nur mit großem Aufwand aus dem Wasser entfernt werden können. Diese niedermolekularen Huminstoffe für sich allein, die wegen ihrer Fähigkeit zur Bindung/Komplexierung/Sorption von Schadstoffen im Wasser in der Regel zu löslichen Huminstoff-Schadstoffkomplexen geeignet sind, sind aber für den erfindungsgemäßen Verfahrenszweck völlig ungeeignet, weil sie nur schwer ausfällbar sind, denn die detoxifizierten Stoffe, die von den Huminstoffen gebunden werden, verbleiben mit diesen in der gelösten Wasserphase. Außerdem eignen sie sich nicht als Katalysator, weil sie nicht über die erforderliche Fähigkeit zur Beschleunigung der oxidierenden oder reduzierenden Umsetzungen in der Wasserphase verfügen. Die in der EP-A 0 467 018 angegebene Lehre würde auch zu huminstoffhaltigen Wasserqualitäten führen, also solchen Wasserqualitäten, die z.B. nach der deutschen Trinkwasserverordnung unzulässig sind.

Sowohl nach dieser Literatur als auch nach den älteren Anmeldungen der Anmelderin P 44 43 828.1 und 195 05 200.5 wird der Einsatz nicht näher spezifizierter Huminstoffe aber auch höhermolekularer Huminstoffe zur Schadstofffixierung im Grundwasser oder Erdreich beschrieben. Diese Verfahren unterscheiden sich von dem erfindungsgemäßen Verfahren dadurch, daß sie nicht in den herkömmlichen Wasserbehandlungsanlagen durchgeführt werden können. Diese Verfahren, die sich auf die Fixierung von Schadstoffen im Erdreich oder Lockergestein bzw. in dem darin vorliegenden Grundwasser beziehen, vermitteln keine Lehre zu den erfindungsgemäßen Zwecken der Beschleunigung reduzierender oder oxidierender Umsetzungen von Wasserinhaltsstoffen in der Gegenwart gelöster oder gefällter Huminstoffe und zum Huminstoffrecycling durch Extraktion.

Aus der Trinkwasserreinigungspraxis ist dem Fachmann bekannt, daß die Entfernung von Eisen, das an niedermolekulare Huminstoffe im Grundwasser gebunden ist und mit diesen in gelöster Form vorliegt, ein erhebliches Problem darstellt.

Insofern ist es auch überraschend, daß die nach dem erfindungsgemäßen Verfahren zunächst im Wasser gelösten überwiegend hochmolekularen Huminstoffe sowie gegebenenfalls im Rohwasser vorhandenen gelösten Huminstoffe und gelösten Huminstoff-Eisen-Komplexe nach der erfindungsgemäßen Reaktionsführung und Fällung ein praktisch huminstoff- und eisenfreies Reinwasser ergeben, das ohne weiteres den Trinkwassernormen entspricht.

Insofern stört es überraschenderweise nach dem erfindungsgemäßen Verfahren auch nicht, wenn die hochmolekulare Huminatlösung einen geringen Anteil niedermolekularer Anteile enthält, die für sich allein ein Problem dargestellt hätten: Während des erfindungsgemäßen Verfahrensablaufes adhärieren und/oder kondensieren diese niedermolekularen Anteile offensichtlich mit den hochmolekularen Anteilen und werden praktisch quantitativ von der Ausfällung mit erfaßt. Diese Eigenschaft des Verfahrens ist bedeutungsvoll für seine Wirtschaftlichkeit, weil dadurch eine aufwendige Fraktionierung der vorzugsweise aus Naturstoffen, vorzugsweise Braunkohle, gewonnenen überwiegend hochmolekularen Huminstoffe von der kleineren Fraktion der niedermolekularen Huminstoffe unterlassen werden kann, ohne daß durch diese Unterlassung ein Nachteil für die Wasserqualität befürchtet werden müßte.

Wegen der vermehrten Bildung von Halogen-Organika gehört die Anwendung der Huminstoffe bei Oxidationsreaktionen mit freien Halogenen oder Halogen-Sauerstoffverbindungen nicht zu den bevorzugten Reaktionen. Wegen der Verminderung der Transparenz der Wasserphase durch die Huminstoffe für das wirksame Photonenspektrum gehört auch die Reaktion von Oxidations- und Reduktionsmitteln in der Gegenwart von photonenaktivierten anorganischen Halbleitern wie z.B. Titan- oder zirkonhaltigen Oxiden nicht zu den bevorzugten Reaktionen, bei denen Huminstoffe nach dem erfindungsgemäßen Verfahren eingesetzt werden.

Dagegen gehören auch diejenigen Abbaureaktionen zu den bevorzugten Umsetzungen, bei denen die erfindungsgemäße Anwendung der Huminstoffe in wäßriger Lösung und/oder Suspension, indem die Huminstoffe selbst durch Strahlung in einen die Reduktion oder Oxidation beschleunigenden angeregten Zustand überführt werden, in der Gegenwart wirksamer Bestrahlung durchgeführt wird.

In der bevorzugten Anwendungsform wird der Huminstoff als Alkalihuminat durch alkalische Braunkohleextraktion gewonnen. Dabei werden wasserlösliche Huminate oder wäßrige Huminatlösungen gewonnen. Vorzugsweise wird das Huminat als Lösung dem zu behandelnden Wasser zugesetzt und zu einer möglichst homogenen Lösung zusammen mit diesem vermischt.

In dem derart konditionierten Rohwasser wird dann vor, während und nach der chemischen Oxidations- oder Reduktionsreaktion das zugesetzte Huminat zur Ausfällung gebracht. Diese Ausfällung wird vorzugsweise durch Vermischen des huminathaltigen Wassers mit Säuren und/oder mehrwertige Kationen enthaltende lösliche Verbindungen herbeigeführt. Vorzugsweise dann, wenn es sich bei den mehrwertigen Kationen um Aluminium handelt, ist es vorteilhaft,, daß Alkalihuminat nach Zugabe von Aluminium dem Wasser zugesetzt wird.

Bevorzugte Fällungsmittel hierfür sind Erdalkalisalze und/oder die als Flockungsmittel gebräuchlichen Salze des Eisens oder des Aluminiums. Es ist aber auch möglich,lösliche Aluminate, Silikate, Titanate oder Zirkonate und andere Schwermetallionen- und -kationenkomplexe einzusetzen, um diese dann durch Ansäuern in die geeignete Wirkform als Co-Fällungsprodukte mit Huminstoff umzusetzen. Während die aluminium- und siliciumhaltigen Huminstoff-Co-Fällungsprodukte vorzugsweise als Sorbenten in der herkömmlichen Wasserbehandlung eingesetzt werden können, eignen sich z.B. die photokatalytisch aktive Metalloxide bildenden Elemente in der Form von Huminstoffverbindungen als Katalysatoren für den photokatalytischen Schadstoffabbau. Beispiele dafür sind die titan-, zirkon-, zink-, eisen-, vanadin- oder niobhaltigen Huminat-Co-Fällungsprodukte als Katalysatoren für den photokatalytischen Schadstoffabbau. Im Gegensatz zu den reinen Schwermetall-Fällungsprodukten lassen sich diese Co-Fällunsprodukte durch ein breites Lichtwellenlängenspektrum aktivieren, das weit in den sichtbaren bis infraroten Wellenlängenbereich verschoben ist. Diese Huminate bewirken ebenfalls eine Beschleunigung der Umsätze im Vergleich zur Wassebehandlung mit den photokatalytisch aktiven reinen Metalloxiden. Es kann auch vorteilhaft sein, daß zumindest ein Teil der Hilfsstoffe A und/oder B als Verbindungen mit einem oder mehreren Stoffen aus der Gruppe der natürlichen oder modifizierten Schichtsilikate angewendet werden, da insbesondere die natürlichen und modifizierten Schichtsilikate vom Bentonit-Typ Sorptionseigenschaften aufweisen, die nicht komplett von den Huminstoffen abgedeckt werden.

Besonders die Umsetzungen, bei denen mindestens eines der Oxidationsmittel dreiwertiges Eisen, Nitrat, Nitrit, Sulfat, vierwertiges Mangan, sechswertiges Chrom, Sauerstoff, Peroxid beteiligt ist, unter Mitwirkung mikrobiologischer Prozesse, wie z.B. aerobe oder anaerobe Wasserreinigungsprozesse, Enteisenung und Entmanganung von Grundwasser, Nitrifikations- und Denitrifikationsverfahren lassen sich durch das erfindungsgemäße Verfahren der Huminstoffbehandlung erheblich beschleunigen. Zusätzlich zu der Reaktionszeitverkürzung lassen sich die biologisch induzierten Verfahren durch die erfindungsgemäße Huminstoffbehandlung stabilisieren. Das ist besonders vorteilhaft bei auftretenden Konzentrationsschwankungen der abzubauenden Abwasserinhaltsstoffe und die verbesserte Resistenz der Mikrobiologie gegen erhöhte Schadstoffkonzentrationen. Besonders vorteilhaft zeigt sich das erfindungsgemäße Verfahren beim biologisch induzierten Abbau von Phenolen, Formaldehyd oder polycyclischen Aromaten. Bei biologischen Prozessen ist es allerdings besonders vorteilhaft, die Huminatlösung vor der beginnenden Stoffumsetzung zumindest teilweise auszufällen.

Bezogen auf die Konzentration der abzubauenden Stoffe werden Huminstoffkonzentrationen vom 5- bis 500-fachen der abzubauenden Stoffkomponente bevorzugt eingesetzt. Dabei hat es sich herausgestellt, daß die biologischen Schadstoffabbauprozesse in der Gegenwart von Huminstoff noch stärker beschleunigt sind, wenn diese in der gleichzeitigen Gegenwart von eisensalzen und/oder oxidischen Eisenverbindungen z.B. Ocker, ablaufen. Auch die entsprechenden Manganverbindungen zeigen eine derartige Wirkungstendenz. Besonders bevorzugte Einsatzgebiete hierfür sind Abwasserbehandlungsverfahren an biologisch aktiven Oberflächen, z.B. Festbetten wie Tropfkörper, Aktivkohlefestbetten, Kiesfilter. Auch Schlammbehandlungsprozesse, insbesondere die Schlammfaulung lassen sich mit diesem Verfahren beschleunigen und stabilisieren.

Neben den biologischen Prozessen werden auch die rein abiotischen Abbauprozesse durch die Anwesenheit von Huminstoff nach dem erfindungsgemäßen Verfahren beschleunigt. Beispielhaft hierfür ist die Phenolbeseitigung in der Gegenwart sauerstoffhaltiger Oxidationsmittel wie Sauerstoff, Peroxiden, Ozon oder Gemischen davon.

Es hat sich überraschend gezeigt, daß die Reaktionsbeschleunigung durch Huminstoff nicht allein durch die ausgefällte Huminsäure bewirkt werden kann, sondern auch durch gelöstes Alkalihuminat, ausgefällte Erdalkali- und Aluminiumhuminate, Schwermetallhuminate, Silicium-, Titan- und Zirkoniumhuminate. Besonders die Eisenhuminate bewirken, vor allem in mikrobiologisch induzierten Prozessen, besonders hohe Umsatzgeschwindigkeiten.

Von Fall zu Fall kann es bei den abiotischen Verfahren vorteilhaft sein, entweder mit frisch teilweise ausgeflocktem oder vollständig ausgeflocktem Huminat die Umsetzung zu beeinflussen. Mit diesem Vorgehen hat man die Möglichkeit, den Huminstoff als homogenen Katalysator, als Katalysator-Kolloid oder als Katalysator-Flocke mit hoher innerer Oberfläche zu benutzen. Unabhängig von der eingesetzten Huminstoffanwendungsform wird aber in allen Fällen eine Umsatzbeschleunigung erreicht.

Das erfindungsgemäße Verfahren hat den Vorteil, daß auch dann, wenn der Abbau des Stoffes unvollständig ist, d.h., wenn die Mineralisation nicht vollständig ist, nicht abgebaute und teilweise abgebaute Substanzen an dem Huminstoff adsorbieren und dann mit dem gefällten Huminstoff abgetrennt werden können. Hierfür bietet auch die Phenoloxidation ein Beispiel, bei der Phenol und chinoide Reaktionsprodukte am Huminstoff gebunden werden oder auch die Trinkwasserenteisenung, bei der 2- und 3-wertiges Eisen durch Bindung an dem verbleibenden Huminat bzw. Huminstoff fixiert und mit diesem aus dem Wasser entfernt werden können.

Es lohnt sich in vielen Fällen, den ausgefällten Huminstoff aus dem Schlamm durch Extraktion mit sauren und/oder alkalischen Lösungen, vorzugsweise Natronlauge und/oder Natriumcarbonat zu eliminieren und erneut einzusetzen.

Es ist aber auch möglich, den ausgefällten Huminstoff in dem zu behandelnden Wasser zu resuspendieren, also direkt wiederzuverwenden. Diese Möglichkeit wird jedoch nicht bevorzugt, weil der gealterte geflockte Huminstoff in seiner Wirksamkeit nachläßt.

Das erfindungsgemäße Verfahren eignet sich ohne Einschränkung für die Wasserbehandlungsverfahren nach dem Stand der Technik. Damit kann das Verfahren ohne weiteres in die bestehenden Prozesse integriert werden. Das gilt für absatzweise Verfahren und kontinuierliche Prozesse. Dabei kann die Ausfällung des Huminstoffs auch so gesteuert werden, daß die Huminstofflocken z.B. auf einem Festbett reversibel immobilisiert werden (z.B. auf einem Kiesfilter, Kohle-, Koks- oder Aktivkohlefilter, gemischten Kunststoffgranulat-/Kohle-/Kies-/Schwermineral-Filter, Tropfkörper) oder im Wasserstrom im Schwerefeld in der Schwebe gehalten werden oder gleichsinnig mit dem Wasserstrom durch den Reaktor geführt werden.

Dabei hat sich gezeigt, daß sich insbesondere die Festbettverfahrten durch das erfindungsgemäße Verfahren dann besonders stark beschleunigen lassen, wenn sie neben ausgefällten Huminatsalzen und/oder Huminsäure als Co-Katalysator Eisen enthalten. Das Eisen kann als Huminat,Hydroxid, Oxidhydrat oder auch als metallisches Eisen vorliegen. Mangan wirkt in dieser Anwendungsform ebenfalls beschleunigend.
Eine besondere Anwendungsmöglickeit des Verfahrens besteht in der Abluftreinigung, bei der z.B. eine Huminstoffsuspension oder -lösung als Abluftwaschmedium eingesetzt wird oder einem Huminstoff als stationäre Phase enthaltenden Tropfkörper eine zu reinigende Gasphase hindurch geleitet wird, wobei zunächst gasförmige Komponenten von der wäßrigen Phase aufgenommen werden und in der Gegenwart von Huminstoff einer biotischen oder abiotischen Umsetzung unterworfen werden. Vorzugsweise bei sauer reagierenden Abluftkomponenten wird die umlaufende Waschlösung so konditioniert, daß sie gelöste Huminstoffanteile enthält.

Die Entfernung der geflockten bzw. gefällten Huminstoffe aus der Wasserphase geschieht in der üblichen Weise z.B. durch Sedimentation/Filtration. Die Ablösung der Huminstoffe von einer festen Trägerphase kann im Kiesbett mit der üblichen Rückspülungsmethode geschehen. Am Tropfkörper kann z.B. eine alkalische Spülung oder auch - je nach Trägereigenschaft - mechanisches Durchbewegen zur Huminstoffablösung eingesetzt werden.

Die Zugabe und Dosierung der Huminatlösung kann über die üblichen und und zu diesem Zweck einfach umzurüstenden Flockmitteldosierstationen erzielt werden.

Zusätzlich zu den aufgeführten Vorteilen des erfindungsgemäßen Verfahrens hat sich überraschend gezeigt, daß auch die Blähschlammbildung in biologischen Kläranlagen durch den Huminstoffanteil im Schlamm verhindert werden kann.

In allgemein weniger bevorzugter Anwendung, im Einzelfall aber möglicherweise zweckmäßig kann aber auch fester Huminstoff, vorzugsweise in feingemahlener Form dem Wasser oder Schlamm hinzugefügt werden. Auch hierbei sind wiederum die aktiven Huminstoffe die bevorzugten. Freie Huminsäure kann durch Extraktion von Naturstoffen, z.B. Braunkohle oder Torf durch Säure, vorzugsweise während des Mahlprozesses oder danach erhalten werden. Direkt aus dem unbehandelten, gemahlenen Material oder auch aus dem säureextrahierten Mahlgut kann durch Umsetzung mit den Verbindungen der jeweils gewünschten Metalle oder Metalloxide die entsprechende Metall- und/oder Metallhuminatverbindung hergestellt werden.
Generell ist das Verfahren für alle oxidierenden und reduzierenden Umsetzungen in der Wasserphase geeignet. Darunter bevorzugt sind allgemein diejenigen Verfahren, die die abiotische oder biotische Umsetzung von Schwermetallionen, Phenolen, Nitrat, Ammonium, Cyanid, Sulfat, Sulfid, Aromaten, aromatischen Polycyclen, Formaldehyd, Alkoholen und Carboxylaten oder deren Gemischen betreffen.

Zur Rückgewinnung der umgesetzten Stoffe ist es möglich, den nach der alkalischen Extraktion des Reaktionsschlammes zur Huminstoffrückgewinnung verbleibenden Extraktionsrückstand z.B. auf Schwermetalle durch Pyrolyse und anschließende metallurgische Aufarbeitung des Pyrolysekokses, aufzuarbeiten. In anderen Fällen wird das Verfahren der Huminstoffrückgewinnung zu aufwendig sein. In solchen Fällen kann der getrocknete Schlamm ebenso einer physikalisch-chemischen bzw. thermischen Aufarbeitung wie der beispielhaft genannten zugeführt werden.

### Beispiele

### Beispiel 1

Zu einer wäßrigen Lösung enthaltend 100mg/l Acetat wurde unter Rühren frischer Klärschlamm aus einer kommunalen Kläranlage hinzugefügt, bis die Klärschlamm-Konzentration bei 0,5g/l Klärschlamm-Trockenmasse lag. Dazu wurden 100 mg Calciumhuminat als wäßrige, frisch gefällte Suspension hinzugefügt. Die Calciumhuminatsuspension wurde hergestellt, indem 0,1%ige Natriumhuminatlösung, die zuvor durch Verdünnen eines 10%igen alkalischen Extrakts einer hessischen Braunkohle hergestellt worden war, bei pH 7 durch Zugabe von 5%iger Calciumchloridlösung zu Calciumhuminat gefällt wurde. Anschließend wurde das Gemisch bei pH 6,5 mit Luft begast. Nach 24 Stunden war die Acetatkonzentration auf 50% des Ausgangswertes abgefallen. Ohne Hinzufügen von Huminstoff war die Acetatkonzentration nach 4 Stunden erst auf 85% abgefallen.

### Beispiel 2

Zu einer wäßrigen Lösung enthaltend 100 mg/l Acetat wurde unter Rühren frischer Klärschlamm aus einer kommunalen Kläranlage hinzugefügt, bis die Klärschlamm-Konzentration bei 0,5g/l Klärschlamm-Trockenmasse lag. Dazu wurden 100 mg/l Calciumhuminat als frisch gefällte, wie in Beispiel 1 hergestellte Suspension hinzugefügt. Dazu wurden noch 50mg/l Eisen-II-sulfat hinzugefügt. Anschließend wurde das Gemisch bei pH 6,5 mit Luft begast. Nach 2 Stunden war die Acetatkonzentration auf 50% des Anfangswertes abgefallen. Ohne Hinzufügen von Huminstoff war die Acetatkonzentration nach 2 Stunden erst auf 90% abgefallen.

## Patentansprüche

1. Verfahren zur oxidierenden oder reduzierenden Umsetzung von Stoffen in der Gegenwart von wäßriger Phase unter Verwendung von die Umsetzung verbessernden Hilfsstoffen A, wie Katalysatoren, Fermenten, Kolloiden, adsorptionsaktiven Feststoffen und/oder lebenden Zellen sowie unter bedarfsweiser Verwendung von Hilfsstoffen B, die die Abscheidung gelöster, dispergierter, emulgierter oder kolloidaler Umsetzungsprodukte und sonstiger Inhaltsstoffe ermöglichen oder verbessern, **dadurch gekennzeichnet**, daß die Hilfsstoffe A zumindest teilweise aus festem und/oder gelöstem und/oder ausgefälltem überwiegend hochmolekularem Huminstoff bestehen und daß die Hilfsstoffe B zumindest teilweise aus ausgefällten und/oder von vornherein festen überwiegend hochmolekularen Huminstoffen bestehen.

2. Verfahren nach Anspruch 1, **dadurch gekennzeichnet**, daß die Hilfsstoffe A und B zum überwiegenden Teil aus Huminstoffen bestehen, die freie oder gebundene Huminsäuren enthalten, die als freie Huminsäuren in alkalischen wäßrigen Lösungen molekulardispers und/oder kolloidal löslich sind und Molgewichte oberhalb 5 000 haben und durch Extraktion aus Naturstoffen hergestellt werden.

3. Verfahren nach Anspruch 1 und 2, dadurch gekennzeichnet,daß zumindest die Hilsstoffe A mit Co-Hilfsstoffen angereichert sind, die mindestens eins der Elemente Eisen und Mangan in der Form von Salzen, Huminaten, an Sauerstoff und/oder Hydroxid gebunden, in Form von Ocker oder als Metall enthalten.

4. Verfahren nach anspruch 1-3, dadurch gekennzeichnet,daß zumindest ein Teil der hilfsstoffe A zumindest an der Oberfläche eines Festbettes reversibel und/oder irreversibel fixiert sind, das in einer oder mehrerer der Formen Kiesfilter, Aktivkohlefilter, einess Kohlefilters, eines Kalk- oder Dolomitfilters, eines Mehrstofffilters oder Tropfkörper betrieben wird.

5. Verfahren nach Anspruch 1-4, dadurch gekennzeichnet,daß zumindest ein Teil der Hilfsstoffe A als Verbindungen mit photokatalytisch aktiven Metalloxiden vorliegt.

6. Verfahren nach Anspruch 1-5, dadurch gekennzeichnet, daß zumindest ein Teil der Hilfsstoffe A und/oder B als Verbindungen mit einem oder mehreren der Elemente der Erdalkalien, des Aluminiums, des Siliciums, des Eisens oder des Mangans oder als freie Huminsäure vorliegt.

7. Verfahren nach Anspruch 1-6, dadurch gekennzeichnet,daß zumindest ein Teil der Hilfsstoffe A und/oder B als Verbindungen mit einem oder mehreren Stoffen aus der Gruppe der natürlichen und modifizierten Schichtsilikate angewendet werden.

8. Verfahren nach den Ansprüchen 1 bis 7, **dadurch gekennzeichnet**, daß der Huminstoff in 5- bis 500-facher Konzentration bezogen auf die Konzentration der umzusetzenden Stoffe eingesetzt wird.

9. Verfahren nach den Ansprüchen 1 bis 8, **dadurch gekennzeichnet**, daß es sich bei den umzusetzenden Stoffen um organische Stoffe handelt.

10. Verfahren nach den Ansprüchen 1 bis 9**, dadurch gekennzeichnet**, daß es sich bei den umzusetzenden Stoffen um anorganische Stoffe handelt.

11. Verfahren nach Anspruch 1 bis 10, **dadurch gekennzeichnet**, daß es sich bei den umgesetzten Stoffen um Gemische handelt, die mindestens eine der Komponenten
Schwermetallverbindungen
Phenole
Nitrat
Ammonium
Cyanid
Aromaten
polycyclische Aromaten
Formaldehyd
Alkohole
Carboxylate
Sulfide
Sulfat
enthält.

12. Verfahren nach den Ansprüchen 1 bis 11, **dadurch gekennzeichnet**, daß der ausgeflockte Huminstoff durch Extraktion mit sauren und/oder alkalischen Lösungen zum Recycling wieder in Lösung gebracht wird.

13. Verfahren nach Anspruch 12, **dadurch gekennzeichnet**, daß aus dem Extraktionsrückstand die dort angereicherten Schwermetalle, Neutralöle, organischen Basen wieder zurückgewonnen werden.

14. Verfahren nach den Ansprüchen 1 bis 13, **dadurch gekennzeichnet**, daß die Umsetzung in der Gegenwart einer Gasphase zum Zweck der Reinigung derselben durchgeführt wird.
